# EUROPEAN PATENT APPLICATION

(11) **EP 4 744 991 A1**
(43) Date of publication of application: **20.05.2026**
(21) Application number: 24853696.3
(22) Date of filing: 09.08.2024
(51) Int. Cl.: B60W 30/06

(54) **INTELLIGENT PARKING METHOD AND APPARATUS, AND DEVICE AND MEDIUM**

(30) Priority: 11.08.2023 CN 202311014264
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: GU, Yijun, Ningbo, Zhejiang 315899 (CN); HAN, Yang, Ningbo, Zhejiang 315899 (CN); DENG, Yongqiang, Ningbo, Zhejiang 315899 (CN); FENG, Yuan, Ningbo, Zhejiang 315899 (CN); CHEN, Baocheng, Ningbo, Zhejiang 315899 (CN); CHEN, Qi, Ningbo, Zhejiang 315899 (CN)
(74) Representative: Michalski Hüttermann & Partner Patentanwälte mbB
(86) International application number: PCT/CN2024/111049
(87) International publication number: WO 2025/036287

(57) **Abstract**

An intelligent parking method, comprising: acquiring spatial information of a target parking space, wherein the spatial information comprises parking space information of the target parking space and obstacle information corresponding to an obstacle in the target parking space, which obstacle information comprises position information of the obstacle; on the basis of the obstacle information and the parking space information, calculating the remaining space of the target parking space; in response to the remaining space meeting a parking condition of a vehicle, determining an actual parking position of the vehicle on the basis of the remaining space; and on the basis of the actual parking position, planning a path for the vehicle, and on the basis of the planned path, completing parking. The intelligent parking method can improve parking efficiency, avoid wasting time and computing power resources on re-planning paths, and minimize the impact of obstacles as much as possible.

## Description

### CROSS-REFERENCE TO RELATED APPLICATIONS

The present application claims priority to Chinese patent application No. 202311014264.8, filed with the China National Intellectual Property Administration on August 11, 2023, which is hereby incorporated by reference in its entirety.

### TECHNICAL FIELD

Embodiments of this specification relate to, but are not limited to, the field of intelligent driving technologies, and in particular, relate to, but are not limited to, an intelligent parking method and apparatus, a device, and a medium.

### BACKGROUND

In modern cities, parking difficulty becomes a trouble issue for many people. Parking becomes more difficult for drivers due to crowded lanes, limited number of parking spots, and narrow parking spots. Especially for some inexperienced drivers, parking is a challenging task, which may consume much time and efforts for the driver. With the advancement of science and technology, intelligent parking is solving the above problems.

Intelligent parking is an automated parking assistance system, which enables vehicles to park automatically through advanced sensing, computing and control technologies. In a process of intelligent parking, a vehicle may first accurately detect a surrounding environment and obstacles by using devices such as a sensor and a camera, and select a suitable parking spot. Then, the vehicle automatically controls the steering wheel, the throttle and the brake to accurately complete the parking action without the intervention of the driver.

The emergence of intelligent parking not only saves a lot of time and efforts for drivers, but also reduces human-caused parking accidents and scratches, thereby greatly improving user experience.

### SUMMARY

The following is a summary of subject matter described in detail herein. This summary is not intended to limit the scope of the claims.

According to a first aspect of the embodiments of this specification, an intelligent parking method is provided, including:
acquiring spatial information of a target parking spot, where the spatial information includes parking spot information of the target parking spot and obstacle information corresponding to an obstacle in the target parking spot, and the obstacle information includes position information of the obstacle;
calculating a remaining space of the target parking spot based on the obstacle information and the parking spot information;
in response to the remaining space satisfying a parking condition of a vehicle, determining an actual parking position of the vehicle according to the remaining space; and
planning a path for the vehicle based on the actual parking position, and parking the vehicle based on the planned path.

According to a second aspect of the embodiments of this specification, an intelligent parking apparatus is provided, including:
an acquiring module, configured to acquire spatial information of a target parking spot, where the spatial information includes parking spot information of the target parking spot and obstacle information corresponding to an obstacle in the target parking spot, and the obstacle information includes position information of the obstacle;
a calculating module, configured to calculate a remaining space of the target parking spot based on the obstacle information and the parking spot information;
a determining module, configured to, in response to the remaining space satisfying a parking condition of a vehicle, determine an actual parking position of the vehicle according to the remaining space; and
a planning module, configured to plan a path for the vehicle based on the actual parking position, and park the vehicle based on the planned path.

According to a third aspect of the embodiments of this specification, an electronic device is provided, including a communication interface, one or more processors, a memory, and a bus, where the communication interface, the one or more processors, and the memory are connected to each other by using the bus;
the memory stores a machine-readable instruction, and the one or more processors perform the foregoing method by calling the machine-readable instruction.

According to a fourth aspect of the embodiments of this specification, a machine-readable storage medium is provided, where the machine-readable storage medium stores a machine-readable instruction, and when the machine-readable instruction is called and executed by one or more processors, the foregoing method is implemented.

The technical solutions provided in the embodiments of this specification can include the following beneficial effects.

According to the foregoing technical solution, when an obstacle exists in the target parking spot, the remaining space of the target parking spot is calculated based on the obstacle information and the parking spot information, available space that can be used for parking in the remaining space is further determined, to obtain the actual parking position, and then path planning is performed based on the actual parking position of the vehicle, to implement vehicle parking. In the foregoing process, on the one hand, before path planning is performed, influence of the obstacle is considered in advance, to improve parking efficiency, and avoid a waste of time and computing power resources in re-planning a path; and on the other hand, the remaining space is calculated based on the obstacle information, and the remaining space is fully used to complete path planning of the vehicle, so that parking of the vehicle is implemented, to reduce impact of the obstacle as much as possible. In addition, the entire parking process does not require manual intervention, and is automatically implemented by the vehicle, which not only improves user experience, but also ensures parking safety. Other aspects will become apparent upon reading and understanding the drawings and detailed description.

### BRIEF DESCRIPTION OF DRAWINGS

FIG. 1 is a schematic diagram of an intelligent parking scenario according to an example embodiment of the present specification.
FIG. 2 is a schematic logic judgement diagram of intelligent parking according to an example embodiment of the present specification.
FIG. 3 is a flowchart of an intelligent parking method according to an example embodiment of the present specification.
FIG. 4 is a schematic diagram of an intelligent parking scenario according to an example embodiment of the present specification.
FIG. 5A and FIG. 5B are schematic diagrams of intelligent parking scenarios according to an example embodiment of the present specification.
FIG. 6 is a schematic structural diagram of an electronic device in which an intelligent parking apparatus is located according to an example embodiment of the present specification.
FIG. 7 is a block diagram of an intelligent parking apparatus according to an example embodiment of the present specification.

### DETAILED DESCRIPTION

Example embodiments will be described in detail herein, examples of which are illustrated in the accompanying drawings. When following description refers to the drawings, unless otherwise indicated, same numerals in different drawings indicate same or similar elements. The implementations described in the following example embodiments do not represent all implementations consistent with one or more embodiments of this specification. Rather, they are merely examples of devices and methods consistent with some aspects of one or more embodiments of the present disclosure as detailed in the appended claims.

It should be noted that the steps of the corresponding method are not necessarily performed in the order shown and described in the present specification in other embodiments. In some other embodiments, the method may include more or fewer steps than those described in this specification. In addition, a single step described in this specification may be decomposed into a plurality of steps for description in other embodiments, and the plurality of steps described in this specification may also be combined into a single step for description in other embodiments.

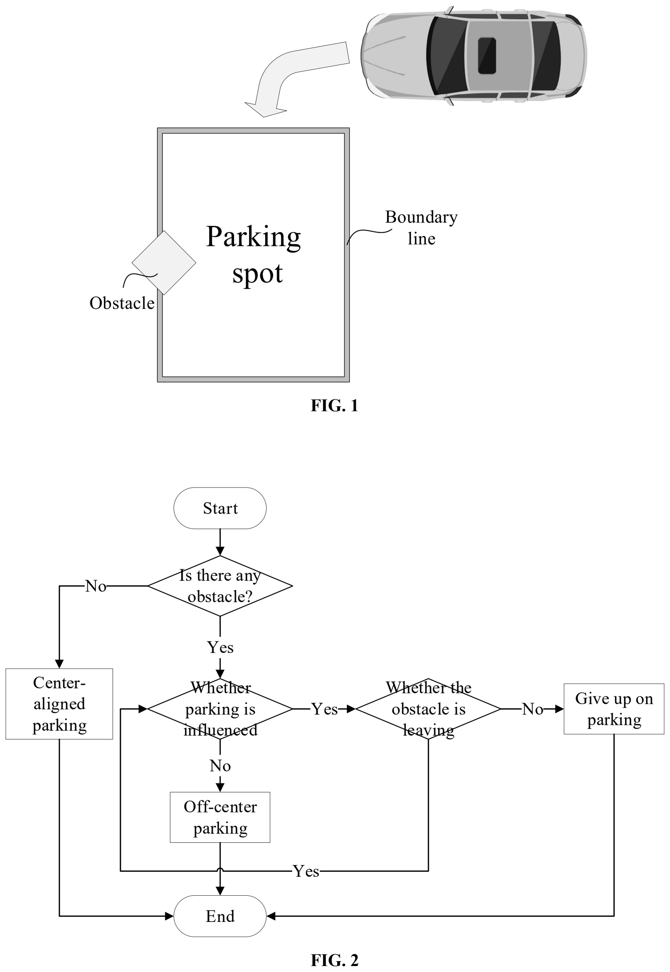

Referring to FIG. 1, FIG. 1 is a schematic diagram of an intelligent parking scenario according to an example embodiment of the present specification. As shown in FIG. 1, an area in which a parking spot is located includes an area including a boundary line of the parking spot.

At present, during intelligent parking, an obstacle-free parking spot is usually selected, but for a parking spot with an obstacle in it, automatic parking cannot be completed, so it is necessary to wait for the obstacle to leave, or the driver manually moves the obstacle away, or the driver manually parks the vehicle.

Therefore, an obstacle in the parking spot will bring great inconvenience to intelligent parking, resulting in excessively long parking time, which affects the vehicle use experience of the driver. In addition, the larger the space occupied by the obstacle, the greater the trouble to the driver.

In view of this, the present specification provides a technical solution of obtaining obstacle information in advance in a parking stage, determining, based on remaining space, whether parking and path planning of a vehicle can be completed, and completing parking of the vehicle based on a planned path.

During implementation, spatial information of the target parking spot may be obtained.

In some embodiments, parking spot information of the target parking spot and obstacle information corresponding to an obstacle in the target parking spot, such as position information of the obstacle, may be obtained through an image acquisition device and/or a vehicle-mounted radar device mounted on the vehicle.

A remaining space of the target parking spot can be calculated based on the obstacle information and the parking spot information.

In some embodiments, the space occupied by the obstacle may be calculated based on the obstacle information, and then an original space of the parking spot is determined based on the parking spot information, so as to calculate the remaining space of the target parking spot.

In response to the remaining space satisfying a parking condition of a vehicle, an actual parking position of the vehicle can be determined according to the remaining space.

For example, for the calculated remaining space, condition judgment may be performed to determine whether the remaining space can accommodate the parking vehicle. If yes, it is determined that the remaining space satisfies the parking condition of the vehicle, and the actual parking position of the vehicle may be determined according to the remaining space.

A path can be planned for the vehicle based on the actual parking position, and the vehicle can be parked based on the planned path.

In some embodiments, an actual pose when the vehicle is parked into the actual parking position may be determined according to the actual parking position; and then path planning is performed on the vehicle according to a current pose and the actual pose of the vehicle.

According to the foregoing technical solution, when an obstacle exists in the target parking spot, the remaining space of the target parking spot is calculated based on the obstacle information and the parking spot information, available space that can be used for parking in the remaining space is further determined, to obtain the actual parking position of the vehicle, and then path planning is performed based on the actual parking position to implement vehicle parking. In the foregoing process, on the one hand, before path planning is performed, influence of the obstacle is considered in advance, to improve parking efficiency, and avoid a waste of time and computing power resources in re-planning a path; and on the other hand, the remaining space is calculated based on the obstacle information, and the remaining space of the target parking spot is fully used to complete path planning of the vehicle, so that parking of the vehicle is implemented, to reduce impact of the obstacle as much as possible. In addition, the entire parking process does not require manual intervention, and is automatically implemented by the vehicle, which not only improves user experience, but also ensures parking safety.

The following describes in detail the intelligent parking method in this specification with reference to the accompanying drawings.

Referring to FIG. 2, FIG. 2 is a schematic logic judgement diagram of intelligent parking according to an example embodiment of the present specification. As shown in FIG. 2, in this specification, intelligent parking may be classified into following four cases.

In a first case, there is no obstacle in a parking spot, and a vehicle may perform center-aligned parking. In other words, because there is no obstacle in the target parking spot, parking may be completed by using an original space of the target parking spot, and for consideration of standardized parking, the vehicle is usually parked in the middle of the target parking spot, which may be referred to as center-aligned parking.

In a second case, there is an obstacle in the parking spot, and the obstacle does not affect parking of the vehicle, and the vehicle may perform off-center parking. In other words, because the obstacle has little impact on parking, parking of the vehicle may be completed by using the remaining space of the target parking spot, and compared with the foregoing first case, a parking position is off-center, which may be referred to as off-center parking.

In a third case, there is an obstacle in the parking spot, and the obstacle affects the parking of the vehicle, which may be determined according to a movement intention of the obstacle. If the obstacle is stationary, the vehicle may give up on parking and turn to select another parking spot.

In a fourth case, on a basis of the third case, if the obstacle tends to leave, the vehicle may wait until the target parking spot has enough remaining space for parking, and then perform the parking action.

However, based on the technical solutions in this specification, the foregoing four cases can be addressed, and the entire parking process does not require manual intervention, which saves time and is efficient.

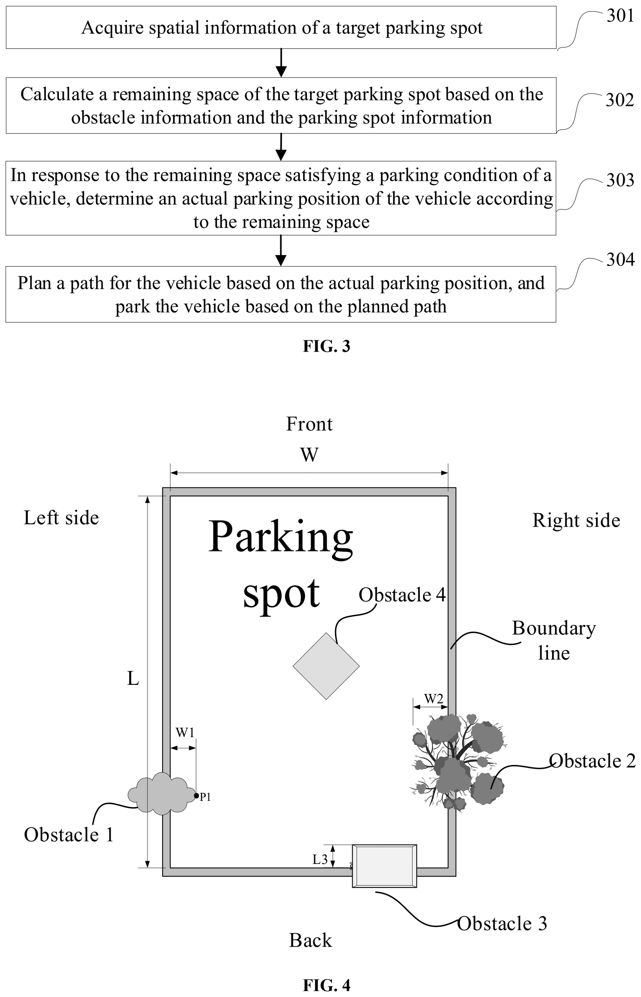

Referring to FIG. 3, FIG. 3 is a flowchart of an intelligent parking method according to an example embodiment of the present specification. As shown in FIG. 3, the method includes steps 301 to 304.

Step 301, acquiring spatial information of a target parking spot, where the spatial information includes parking spot information of the target parking spot and obstacle information corresponding to an obstacle in the target parking spot, and the obstacle information includes position information of the obstacle.

Step 302, calculating a remaining space of the target parking spot based on the obstacle information and the parking spot information.

Step 303, in response to the remaining space satisfying a parking condition of a vehicle, determining an actual parking position of the vehicle according to the remaining space.

Step 304, planning a path for the vehicle based on the actual parking position, and parking the vehicle based on the planned path.

It should be noted that the obstacle refers to any object, animal, or plant that obstructs a parking process of the vehicle.

For example, the obstacle may be a fixed object, such as a wall, a tree, a rock, etc., or a movable object, such as construction materials, stacking objects, an electric vehicle, etc., or a living being, which is not limited in the present disclosure.

In this embodiment, the spatial information of the target parking spot may be obtained.

For example, the spatial information may include parking spot information of the target parking spot, for example, a size, a shape, or a location of the target parking spot. The spatial information may further include obstacle information corresponding to an obstacle in the target parking spot, and the obstacle information may include position information of the obstacle, such as a position of the obstacle relative to the parking spot, a size and a shape of the obstacle.

In a shown implementation, when step 301 is performed, spatial information within the target parking spot and within a specified range outside a boundary line of the target parking spot may be obtained.

For example, as shown in FIG. 1, as a part of the obstacle is located within the parking spot, in order to obtain more comprehensive obstacle information and improve the accuracy of obstacle detection, not only the spatial information within the target parking spot can be obtained, but also the spatial information within a specified range outside the boundary line can be obtained based on the boundary line of the target parking spot.

In a shown implementation, when step 301 is performed, the target parking spot and the obstacle in the target parking spot may be identified based on an image acquisition device and/or a vehicle-mounted radar device that are mounted on the vehicle; and parking spot information of the target parking spot and obstacle information corresponding to the obstacle in the target parking spot are obtained.

For example, the vehicle may be equipped with an image acquisition device and/or a vehicle-mounted radar device, and certainly may also include other hardware for detection to identify the target parking spot and obstacles in the target parking spot. In addition, parking spot information is obtained for the identified target parking spot, and obstacle information is obtained for the identified obstacle.

In this embodiment, the remaining space of the target parking spot can be calculated based on the obstacle information and the parking spot information.

For example, the space occupied by the obstacle may be calculated based on the obstacle information, and then an original space of the parking spot without any obstacle is determined based on the parking spot information, to calculate the current remaining space of the target parking spot.

In a shown embodiment, the obstacle information further includes state information of the obstacle; where the state of the obstacle includes a stationary state and a moving state; and the state information includes a moving direction and a moving speed.

When step 302 is performed, different calculation logics of the remaining space may be performed according to different states of the obstacle: in response to the obstacle being stationary, the remaining space of the target parking spot is calculated based on the position information of the obstacle and the parking spot information; and in response to the obstacle being in motion, the remaining space of the target parking spot is dynamically calculated according to the state information, the position information of the obstacle, and the parking spot information.

In an example, when the obstacle is stationary, which may correspond to the second case or the third case in FIG. 2, the remaining space of the target parking spot needs to be calculated based on the position information of the obstacle and the parking spot information, so as to determine whether the obstacle affects the parking of the vehicle.

In still another example, when the obstacle is in motion, which may correspond to the second case or the fourth case in FIG. 2, the remaining space of the target parking spot needs to be dynamically calculated based on the state information and the position information of the obstacle, and the parking spot information, because the remaining space changes as the obstacle moves.

By executing different calculation logics of the remaining space based on the state of the obstacle, various situations of the obstacle can be handled, the adaptability of intelligent parking can be improved, and the vehicle can be parked in time when the remaining space meets the vehicle parking condition, thereby saving the user's time.

In a shown implementation, when the obstacle is in motion, different detection periods may be set based on different moving directions of the obstacle: in response to the moving direction being a direction away from the target parking spot, dynamically calculating the remaining space of the target parking spot based on a first detection period, the state information of the obstacle, the position information of the obstacle, and the parking spot information; and in response to the moving direction being a direction toward the target parking spot, dynamically calculating the remaining space of the target parking spot based on a second detection period, the state information of the obstacle, the position information of the obstacle, and the parking spot information, where the second detection period is greater than the first detection period.

In an example, when the moving direction of the obstacle is a direction away from the target parking spot, the remaining space of the target parking spot may be dynamically calculated based on the first detection period, the state information of the obstacle, the position information of the obstacle, and the parking spot information.

In another example, when the moving direction of the obstacle is a direction toward the target parking spot, the remaining space of the target parking spot may be dynamically calculated based on the second detection period, the state information of the obstacle, the position information of the obstacle, and the parking spot information.

It should be noted that, when the obstacle is moving away from the parking spot, compared with moving toward the parking spot, the remaining space is more likely to meet the parking condition of the vehicle, so the second detection period may be set to be greater than the first detection period, thereby improving the detection frequency when the obstacle is moving away from the parking spot, so as to ensure that the vehicle can be immediately parked once the obstacle clears sufficient space, thereby saving the user's time.

In a shown implementation, when step 302 is performed, an occupied size over the target parking spot by the obstacle may be calculated based on the obstacle information and the parking spot information; a remaining length is calculated by subtracting, in a length direction of the target parking spot, the occupied size corresponding to the obstacle in the length direction from a parking spot length; a remaining width is calculated by subtracting, in a width direction of the target parking spot, the occupied size corresponding to the obstacle in the width direction and a door-open width when doors of the vehicle are in an open state from a parking spot width; and if the remaining length exceeds a preset length and the remaining width exceeds a preset width, it is determined that the remaining space meets the parking condition of the vehicle.

Referring to FIG. 4, FIG. 4 is a schematic diagram of an intelligent parking scenario according to an example embodiment of the present specification.

As shown in FIG. 4, an obstacle 3 has a greater influence on the length direction than on the width direction of the parking spot, thus for the obstacle 3, the occupied size over the parking spot by the obstacle 3 in the length direction is calculated based on the obstacle information of the obstacle 3 and the parking spot information.

Further, in the length direction, the remaining length L_{remaining} is calculated by subtracting the occupied size L3 by the obstacle 3 in the length direction from the parking spot length L.

As shown in FIG. 4, obstacles 1 and 2 have a greater influence on the length direction than on the width direction of the parking spot, therefore, for the obstacles 1 and 2, the occupied size over the parking spot by the obstacle 1 in the width direction is calculated based on the obstacle information of the obstacle 1 and the parking spot information; and the occupied size over the parking spot by the obstacle 2 in the width direction is calculated based on the obstacle information of the obstacle 2 and the parking spot information.

In some embodiments, in the width direction, the remaining width W_{remaining} is calculated by subtracting the occupied size W1 by the obstacle 1 in the width direction, the occupied size W2 by the obstacle 2 in the width direction, and the door-open width W_{door} when the doors are in the open state from the parking spot width W.

In order to facilitate the passengers to get on and off, the door-open width needs to be considered in advance, which may be 0.1 meter to 0.4 meter, which is not limited in the present disclosure.

After the remaining length and the remaining width are determined, the remaining length and the remaining width may be compared with a preset length and width that meet the parking condition of the vehicle, to determine whether the remaining space of the target parking spot meets the parking condition of the vehicle.

If either of the remaining length and the remaining width is less than the preset value, it may be considered that the remaining space does not meet the parking condition of the vehicle. If the remaining length exceeds the preset length and the remaining width also exceeds the preset width, it may be determined that the remaining space meets the parking condition of the vehicle.

In an illustrated implementation, when calculating the occupied size over the target parking spot by the obstacle, the position of the obstacle relative to the target parking spot may be determined based on the obstacle information and the parking spot information, and the occupied size over the target parking spot by the obstacle in the length direction and/or the width direction of the target parking spot may be calculated based on the position of the obstacle relative to the target parking spot.

It should be noted that, for the obstacle in the target parking spot, the position of the obstacle relative to the target parking spot may be first determined according to the obstacle information and the parking spot information, and then it is determined according to the position of the obstacle relative to the target parking spot whether to calculate the occupied size over the parking spot by the obstacle in the length direction or the width direction.

For example, for the obstacle 1 in FIG. 4, as the position of the obstacle 1 is on the left side of the parking spot relative to the parking spot and is not in the central area of the parking spot, the obstacle 1 has less influence on the length direction than on the width direction of the parking spot. The same applies to the obstacle 2, which will not be repeated herein. For the obstacle 3, as the position of the obstacle 3 is in the back of the parking spot relative to the parking spot and not in the central area of the parking spot, the obstacle 1 has less influence on the width direction than on the length direction of the parking spot. For the obstacle 4, as the position of the obstacle 4 is located in the central area relative to the parking spot, both the length direction and the width direction will affect the parking of the vehicle.

In a shown implementation, the occupied size is a maximum perpendicular distance between a boundary line closest to the obstacle and an outer contour of the obstacle facing toward the target parking spot.

For example, when calculating the occupied size of the obstacle, in order to improve the accuracy of calculation, the occupied size may be defined as the maximum perpendicular distance between the boundary line closest to the obstacle and the outer contour of the obstacle facing toward the target parking spot.

Taking FIG. 4 as an example, for the obstacle 1, the boundary line closest to the obstacle 1 is the left side line of the parking spot, and a side of the obstacle facing the parking spot is the right side of the obstacle, then perpendicular distances between points on the right-side contour of the obstacle and the left side line of the parking spot may be calculated, and a value of the maximum distance is taken as the occupied size W1. Assuming that a point P1 is farthest from the left side line of the parking spot in the contour of the obstacle facing the parking spot, the occupied size W1 may be a perpendicular distance from P1 to the left side line of the parking spot.

It should be noted that, in FIG. 4, the inner side of the boundary line is taken as a reference for illustration, and in practical applications, those skilled in the art can make selection according to needs. Similarly, the illustration of the length L and the width W of the parking spot in FIG. 4 is not a limitation on the size of the parking spot, and the length and the width of the parking spot may also be defined by those skilled in the art as required.

In addition, the contour in FIG. 4 may be a projection of the obstacle 1 on a plane where the parking spot is located, or the farthest point may be determined in other manners.

In an implementation, when step 302 is performed, an occupied three-dimensional space over the target parking spot by the obstacle may be calculated based on the obstacle information and the parking spot information; a theoretical three-dimensional space of the target parking spot is trimmed based on the occupied three-dimensional space to obtain a remaining three-dimensional space; and if three-dimensional sizes corresponding to the remaining three-dimensional space respectively reach a specified threshold, it is determined that the remaining space meets the parking condition of the vehicle, where the threshold is determined based on a model of the vehicle.

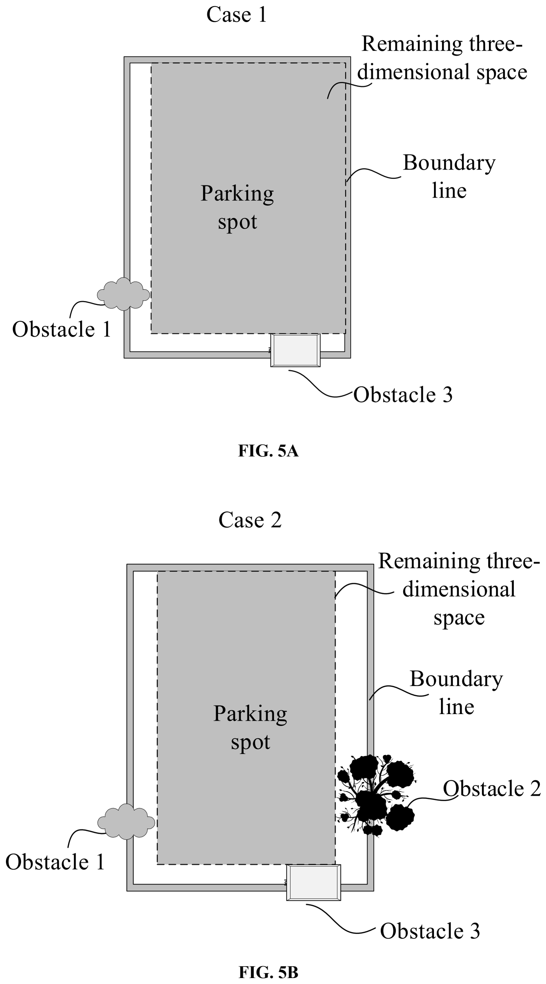

FIG. 5A and FIG. 5B are schematic diagrams of intelligent parking scenarios according to an example embodiment of the present specification.

It should be noted that, compared with FIG. 4 in which occupied sizes in the length direction and the width direction are considered, on the basis of FIG. 4, FIG. 5A and FIG. 5B further take a height direction into consideration, so as to cope with more complex environments.

For example, in an open-air environment, branches of a tree may interfere with a roof of the vehicle, so that the roof may be scratched during parking, and the embodiments of FIG. 5A and FIG. 5B have better adaptability and can flexibly cope with this situation. When a space down below the branches is sufficient for the vehicle to park in, it can be determined that the remaining space of the target parking spot meets the condition for the vehicle to park, so that the vehicle parking can then be completed.

For example, the three-dimensional space corresponding to the obstacle and the theoretical three-dimensional space corresponding to the parking spot may be determined based on the obstacle information and the parking spot information, and the three-dimensional space occupied by the obstacle over the target parking spot may be calculated according to the part of the obstacle within the parking spot.

Then, based on a concept of trimming, the three-dimensional space occupied by the obstacle may be removed from the theoretical three-dimensional space corresponding to the target parking spot, to obtain the remaining three-dimensional space of the target parking spot.

Taking FIG. 5A and FIG. 5B as an example, assuming that the space occupied by the obstacle is regarded as a cuboid, then a remaining space of the cuboid may be obtained after trimming, which corresponds to the gray dashed box in FIG. 5A and FIG. 5B from the top view.

As shown in FIG. 5A and FIG. 5B, compared with FIG. 5A, as there are three obstacles in FIG. 5B, the available remaining three-dimensional space is smaller than that in FIG. 5A.

It should be noted that although FIG. 5A and FIG. 5B use top views, as the concept of the present disclosure is easy to understand, it does not affect the understanding of those skilled in the art.

In addition, the trimming manner given above is only a simple illustration, and during trimming, it is also possible to select to trim off the space occupied by the obstacle, reserve more remaining space, and perform vehicle parking judgment on the remaining space. Those skilled in the art can determine the trimming range of the space occupied by the obstacle by themselves based on the inventive concept provided in the present disclosure, which is not limited in the present disclosure.

Continuing with another example, if three-dimensional sizes corresponding to the remaining three-dimensional space reach specified thresholds in the three dimensions of length, width, and height, respectively, it may be determined that the remaining space satisfies the parking condition of the vehicle.

The thresholds in the above three dimensions may be determined based on the model of the vehicle, and different thresholds may be set for different vehicles.

In this embodiment, in response to the remaining space of the target parking spot satisfying the parking condition of the vehicle, an actual parking position of the vehicle may be determined according to the remaining space.

For example, for the calculated remaining space, condition judgment may be performed to determine whether the remaining space can accommodate the parking vehicle. If yes, it is determined that the remaining space satisfies the parking condition of the vehicle, and the actual parking position of the vehicle may be determined according to the remaining space.

In a shown implementation, when step 303 is performed, a size of the actual parking position of the vehicle and an offset of the actual parking position relative to the boundary line of the target parking spot may be determined based on the remaining space and the size of the vehicle.

In some embodiments, the actual parking position of the vehicle may be determined according to the remaining space and a size of the vehicle, where the actual parking position of the vehicle may include a size of the actual parking position, such as a length and a width, and may further include an offset of the actual parking position relative to a boundary line of the target parking spot, thereby facilitating positioning of the vehicle during parking and determining a final parking position of the vehicle.

In the present embodiment, a path can be planned for the vehicle based on the actual parking position, and the vehicle can be parked based on the planned path.

In some embodiments, path planning may be performed for the vehicle according to a center point of the current position of the vehicle and a center point of the actual parking position, and parking is completed based on the planned path.

In an illustrated implementation, when step 304 is performed, an actual pose when the vehicle is parked into the actual parking position may be determined according to the actual parking position; and then path planning is performed on the vehicle according to a current pose and the actual pose of the vehicle.

In some embodiments, the actual pose of the vehicle when the vehicle is parked into the actual parking position may be determined according to the actual parking position, for example, pose parameters such as an angle at which the vehicle enters the actual parking position, and an orientation of the vehicle when the vehicle is parked at the actual parking position are determined according to the actual parking position, and the pose parameters are compared with the pose parameters of the current pose of the vehicle, so as to determine how to adjust the pose of the vehicle to plan the path of the vehicle.

According to the foregoing technical solution, when an obstacle exists in the target parking spot, the remaining space of the target parking spot is calculated based on the obstacle information and the parking spot information, available space that can be used for parking in the remaining space is further determined, to obtain the actual parking position, and then path planning is performed based on the actual parking position of the vehicle, to implement vehicle parking. In the foregoing process, on the one hand, before path planning is performed, influence of the obstacle is considered in advance, to improve parking efficiency, and avoid a waste of time and computing power resources in re-planning a path; and on the other hand, the remaining space is calculated based on the obstacle information, and the remaining space is fully used to complete path planning of the vehicle, so that parking of the vehicle is implemented, to reduce impact of the obstacle as much as possible. In addition, the entire parking process does not require manual intervention, and is automatically implemented by the vehicle, which not only improves user experience, but also ensures parking safety.

In an example implementation of the present specification, a device for implementing the foregoing method is further provided.

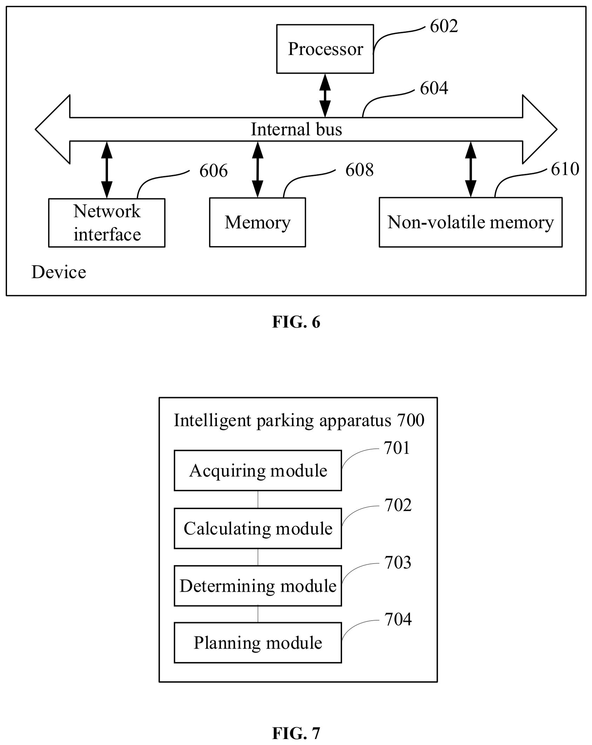

FIG. 6 is a schematic structural diagram of a device according to an example embodiment. Referring to FIG. 6, in terms of hardware, the device includes a processor 602, an internal bus 604, a network interface 606, a memory 608, and a non-volatile memory 610, and certainly may further include hardware required by another service. One or more embodiments of this specification can be implemented based on software, for example, the processor 602 reads a corresponding computer program from the non-volatile memory 610 into the memory 608 and then runs the computer program. Of course, in addition to software implementations, one or more embodiments of the present specification do not exclude other implementations, such as logic devices or a combination of software and hardware, that is, the execution subject of the following processing flow is not limited to each logic unit, and may also be hardware or logic devices.

As shown in FIG. 7, in a software implementation, an intelligent parking apparatus 700 is provided, including: an acquiring module 701, configured to acquire spatial information of a target parking spot, where the spatial information includes parking spot information of the target parking spot and obstacle information corresponding to an obstacle in the target parking spot, and the obstacle information includes position information of the obstacle; a calculating module 702, configured to calculate a remaining space of the target parking spot based on the obstacle information and the parking spot information; and a determining module 703, configured to, in response to the remaining space satisfying a parking condition of a vehicle, determine an actual parking position of the vehicle according to the remaining space; and; and a planning module 704, configured to plan a path for the vehicle based on the actual parking position, and parking the vehicle based on the planned path.

Optionally, the acquiring module 701 is further configured to acquire the spatial information within the target parking spot and within a specified range outside a boundary line of the target parking spot.

Optionally, the acquiring module 701 is further configured to identify the target parking spot and the obstacle in the target parking spot based on an image acquisition device and/or a vehicle-mounted radar device that are mounted on the vehicle; and acquire the parking spot information of the target parking spot and the obstacle information corresponding to the obstacle in the target parking spot.

In some embodiments, the obstacle information further includes state information of the obstacle; the state information includes a moving direction and a moving speed; and the calculating module 702 is further configured to: in response to the obstacle being stationary, calculate the remaining space of the target parking spot based on the position information of the obstacle and the parking spot information; in response to the obstacle being in motion, dynamically calculating the remaining space of the target parking spot according to the state information of the obstacle, the position information of the obstacle, and the parking spot information.

In some embodiments, the calculating module 702 is further configured to: in response to the moving direction being a direction away from the target parking spot, dynamically calculate the remaining space of the target parking spot based on a first detection period, the state information of the obstacle, the position information of the obstacle, and the parking spot information; and in response to the moving direction being a direction toward the target parking spot, dynamically calculate the remaining space of the target parking spot based on a second detection period, the state information of the obstacle, the position information of the obstacle, and the parking spot information, where the second detection period is greater than the first detection period.

In some embodiments, the calculating module 702 is further configured to: calculate, based on the obstacle information and the parking spot information, occupied sizes over the target parking spot by the obstacle in a length direction and a width direction of the target parking spot respectively; calculate a remaining length by subtracting, in the length direction of the target parking spot, an occupied size by the obstacle in the length direction from a parking spot length; and calculate a remaining width by subtracting, in the width direction of the target parking spot, an occupied size by the obstacle in the width direction and a door-open width when doors are in an open state from a parking spot width; and the determining module 703 is further configured to: in response to the remaining length exceeding a preset length and the remaining width exceeding a preset width, determine that the remaining space satisfies the parking condition of the vehicle.

In some embodiments, the calculating module 702 is further configured to: determine a position of the obstacle relative to the parking spot based on the obstacle information and the parking spot information, and calculate, according to the position of the obstacle relative to the parking spot, an occupied size over the target parking spot by the obstacle in the length direction and/or the width direction of the target parking spot.

In some embodiments, the occupied size is a maximum perpendicular distance between a boundary line closest to the obstacle and an outer contour of the obstacle facing toward the target parking spot.

In some embodiments, the calculating module 702 is further configured to: calculate an occupied three-dimensional space over the target parking spot by the obstacle based on the obstacle information and the parking spot information; trim a theoretical three-dimensional space of the target parking spot based on the occupied three-dimensional space to obtain a remaining three-dimensional space; and the determining module 703 is further configured to: in response to three-dimensional sizes corresponding to the remaining three-dimensional space respectively reaching a specified threshold, determine that the remaining space meets the parking condition of the vehicle, where the threshold is determined based on a model of the vehicle.

In some embodiments, the determining module 703 is further configured to: determine a size of the actual parking position of the vehicle and an offset of the actual parking position relative to a boundary line of the target parking spot according to the remaining space and a size of the vehicle.

In some embodiments, the planning module 704 is further configured to determine an actual pose when the vehicle is parked into the actual parking position according to the actual parking position; and perform path planning on the vehicle according to a current pose and the actual pose of the vehicle.

For specific implementation processes of functions and roles of the modules in the apparatus 700, reference may be made to implementation processes of corresponding steps in the foregoing method, which will not repeated herein.

The apparatus implementations described above are merely illustrative, where the units described as separate components may or may not be physically separate, and the components displayed as units may or may not be physical modules, that is, may be located in one place, or may be distributed on a plurality of network modules. Some or all of the units or modules may be selected according to actual needs to achieve the objectives of the solutions of the present specification. Those skilled in the art can understand and implement without making creative efforts.

The system, apparatus, module, or unit described in the foregoing embodiments may be implemented by a computer chip or an entity, or may be implemented by a product having a function. A typical implementation device is a computer, and a specific form of the computer may be a personal computer, a laptop computer, a cellular phone, a camera phone, a smartphone, a personal digital assistant, a media player, a navigation device, an email transceiver device, a game console, a tablet computer, a wearable device, or a combination of any several of these devices.

In a typical configuration, a computer includes one or more processors (central processing unit, CPU), input/output interfaces, network interfaces, and memory.

The memory may include a volatile memory, a random access memory (RAM), and/or a non-volatile memory in a computer-readable medium, for example, a read-only memory (ROM) or a flash RAM. The memory is an example of a computer-readable medium.

The computer-readable medium includes permanent and non-permanent, and removable and non-removable media that can implement information storage by any method or technology. The information may be a computer-readable instruction, a data structure, a program module, or other data. Examples of a storage medium of a computer include, but are not limited to, a phase change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a magnetic cassette tape, a magnetic disk storage, a quantum memory, a graphene-based storage medium or another magnetic storage device, or any other non-transmission medium, and may be configured to store information that can be accessed by a computing device. As defined herein, the computer-readable medium does not include transitory computer-readable media, such as modulated data signals and carriers.

It should also be noted that the terms "include", "comprise" or any other variants thereof are intended to cover non-exclusive inclusion, so that a process, method, commodity or device that includes a series of elements not only includes those elements, but also includes other elements that are not explicitly listed, or further includes elements inherent to such a process, method, commodity or device. Without further limitation, an element defined by the phrase "including a..." does not exclude the presence of other identical elements in the process, method, article, or device that includes the element.

The specific embodiments of the present disclosure are described above. Other embodiments are within the scope of the following claims. In some cases, the actions or steps described in the claims may be performed in an order different from that in the embodiments and still achieve the desired results. In addition, the processes depicted in the accompanying figures do not necessarily require the particular order shown, or sequential order, to achieve desirable results. In certain implementations, multitasking and parallel processing are also possible or may be advantageous.

Terms used in one or more embodiments of this specification are merely intended to describe specific embodiments, but are not intended to limit one or more embodiments of this specification. As used in one or more embodiments of the present disclosure and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items.

It should be understood that although the terms "first", "second", "third", etc. may be used to describe various information in one or more embodiments of the present specification, the information should not be limited to these terms. These terms are only used to distinguish the same type of information from each other. For example, without departing from the scope of one or more embodiments of this specification, "first information" may also be referred to as "second information", and similarly, "second information" may also be referred to as "first information". Depending on the context, the word "if" as used herein may be interpreted as "when" or "upon" or "in response to determining".

The above is one or more embodiments of this specification, and is not intend to limit one or more embodiments of this specification. Any modification, equivalent replacement, improvement, and the like made within the spirit and principle of the one or more embodiments of the present specification shall fall within the protection scope of the one or more embodiments of the present specification.

## Claims

1. An intelligent parking method, comprising:
acquiring spatial information of a target parking spot, wherein the spatial information comprises parking spot information of the target parking spot and obstacle information corresponding to an obstacle in the target parking spot, and the obstacle information comprises position information of the obstacle;
calculating a remaining space of the target parking spot based on the obstacle information and the parking spot information;
in response to the remaining space satisfying a parking condition of a vehicle, determining an actual parking position of the vehicle according to the remaining space; and
planning a path for the vehicle based on the actual parking position, and parking the vehicle based on the planned path.

2. The method according to claim 1, wherein acquiring the spatial information of the target parking spot comprises:
acquiring the spatial information within the target parking spot and within a specified range outside a boundary line of the target parking spot.

3. The method according to claim 1, wherein acquiring the spatial information of the target parking spot comprises:
identifying the target parking spot and the obstacle in the target parking spot based on at least one of an image acquisition device or a vehicle-mounted radar device that are mounted on the vehicle; and
acquiring the parking spot information of the target parking spot and the obstacle information corresponding to the obstacle in the target parking spot.

4. The method according to claim 1, wherein the obstacle information further comprises state information of the obstacle, wherein the state information comprises a moving direction and a moving speed, and calculating the remaining space of the target parking spot based on the obstacle information and the parking spot information comprises:
in response to the obstacle being stationary, calculating the remaining space of the target parking spot based on the position information of the obstacle and the parking spot information;
in response to the obstacle being in motion, dynamically calculating the remaining space of the target parking spot according to the state information of the obstacle, the position information of the obstacle, and the parking spot information.

5. The method according to claim 4, wherein dynamically calculating the remaining space of the target parking spot according to the state information of the obstacle, the position information of the obstacle, and the parking spot information comprises:
in response to the moving direction of the obstacle being away from the target parking spot, dynamically calculating, based on a first detection period, the remaining space of the target parking spot according to the state information of the obstacle, the position information of the obstacle, and the parking spot information; and
in response to the moving direction of the obstacle being toward the target parking spot, dynamically calculating, based on a second detection period, the remaining space of the target parking spot according to the state information of the obstacle, the position information of the obstacle, and the parking spot information;
wherein the second detection period is greater than the first detection period.

6. The method according to claim 1, wherein calculating the remaining space of the target parking spot based on the obstacle information and the parking spot information comprises:
calculating an occupied size over the target parking spot by the obstacle based on the obstacle information and the parking spot information;
in a length direction of the target parking spot, calculating a remaining length by subtracting the occupied size by the obstacle in the length direction from a parking spot length; and
in a width direction of the target parking spot, calculating a remaining width by subtracting the occupied size by the obstacle in the width direction and a door-open width when doors of the vehicle are in an open state from a parking spot width;
wherein the remaining space satisfying the parking condition of the vehicle comprises: the remaining length is greater than a preset length, and the remaining width is greater than a preset width.

7. The method according to claim 6, wherein calculating the occupied size over the target parking spot by the obstacle based on the obstacle information and the parking spot information comprises:
determining a position of the obstacle relative to the target parking spot based on the obstacle information and the parking spot information; and
calculating, based on the position of the obstacle relative to the target parking spot, the occupied size over the target parking spot by the obstacle in at least one of the length direction or the width direction of the target parking spot.

8. The method according to claim 6, wherein the occupied size is a maximum perpendicular distance between a boundary line closest to the obstacle and an outer contour of the obstacle facing toward the target parking spot.

9. The method according to claim 1, wherein calculating the remaining space of the target parking spot based on the obstacle information and the parking spot information comprises:
calculating an occupied three-dimensional space of the target parking spot by the obstacle based on the obstacle information and the parking spot information; and
trimming a theoretical three-dimensional space of the target parking spot based on the occupied three-dimensional space to obtain a remaining three-dimensional space;
wherein the remaining space satisfying the parking condition of the vehicle comprises: each one of three-dimensional sizes corresponding to the remaining three-dimensional space reaches a specified threshold, wherein the threshold is determined based on a model of the vehicle.

10. The method according to claim 1, wherein determining the actual parking position of the vehicle according to the remaining space comprises:
determining a size of the actual parking position of the vehicle and an offset of the actual parking position relative to a boundary line of the target parking spot according to the remaining space and a size of the vehicle.

11. The method according to claim 1, wherein planning the path for the vehicle based on the actual parking position comprises:
determining, according to the actual parking position, an actual pose when the vehicle is parked at the actual parking position; and
planning the path for the vehicle according to a current pose and the actual pose of the vehicle.

12. An intelligent parking apparatus, comprising:
an acquiring module, configured to acquire spatial information of a target parking spot, wherein the spatial information comprises parking spot information of the target parking spot and obstacle information corresponding to an obstacle in the target parking spot, and the obstacle information comprises position information of the obstacle;
a calculating module, configured to calculate a remaining space of the target parking spot based on the obstacle information and the parking spot information;
a determining module, configured to, in response to the remaining space satisfying a parking condition of a vehicle, determine an actual parking position of the vehicle according to the remaining space; and
a planning module, configured to plan a path for the vehicle based on the actual parking position, and park the vehicle based on the planned path.

13. An electronic device, comprising:
one or more processors;
a memory for storing a processor-executable instruction;
wherein the one or more processors, when executing the processor-executable instruction, are caused to perform the method according to any one of claims 1-11.

14. A machine-readable storage medium, storing a machine-readable instruction, wherein when the machine-readable instruction is executed by one or more processors, the method according to any one of claims 1-11 is implemented.
